# EUROPÄISCHE PATENTSCHRIFT

(11) **EP 1 726 078 B1**
(45) Veröffentlichungstag und Bekanntmachung des Hinweises auf die Patenterteilung: **27.01.2010**
(21) Anmeldenummer: 05707889.1
(22) Anmeldetag: 31.01.2005
(51) Int. Cl.: H02K 3/32

(54) **HAUPTELEMENT F R EINE ELEKTRISCHE MASCHINE**
MAIN ELEMENT FOR AN ELECTRIC MACHINE
ELEMENT PRINCIPAL POUR MACHINE ELECTRIQUE

(30) Priorität: 06.03.2004 DE 102004011094
(43) Veröffentlichungstag der Anmeldung: 29.11.2006
(73) Patentinhaber: ROBERT BOSCH GMBH, 70442 Stuttgart (DE)
(72) Erfinder: PROKSCHA, Joachim, 77815 Buehl (DE); SPONAR, Heiko, 76437 Rastatt (DE); TEMPEL, Juergen, 76530 Baden-Baden (DE); HUBER, Michael, 77836 Rheinmuenster (DE)
(86) Internationale Anmeldenummer: PCT/EP2005/050381
(87) Internationale Veröffentlichungsnummer: WO 2005/086319

(56) Entgegenhaltungen:
- EP-A- 0 772 275
- EP-A- 1 276 207
- EP-A- 1 292 003
- EP-A- 1 341 289
- DE-U1- 20 204 507
- FR-A- 2 786 626
- US-A- 6 081 059

## Beschreibung

### Stand der Technik

Die Erfindung geht aus von einem Hauptelement für eine elektrische Maschine nach dem Oberbegriff des Anspruchs 1.

Bei einem bekannten Stator als Hauptelement eines Innenläufermotors (DE 299 16 605 U1) ist der magnetisch leitfähige Körper aus zwei Blechpaketen zusammengesetzt, die aus einzelnen Blechzuschnitten geschichtet sind. Ein Blechzuschnitt weist eine Aufnahmeöffnung für den Rotor mit einem Öffnungsrand auf, über dessen Umfang eine Anzahl von schwalbenschwanzartigen Fügenuten äquidistant ausgebildet sind. Diese Blechzuschnitte sind axial aneinandergelegt und zu einem hohlzylindrischen Rückschlussjoch paketiert. Ein weiterer Blechzuschnitt weist einen Zahnsteg mit einem schwalbenschwanzartigen Zahnfuß und einen über den Zahnsteg vorstehenden Zahnkopf oder -schuh auf. Diese Blechzuschnitte werden zu Zahnabschnitten von Axialzähnen paketiert. Ein dritter Blechzuschnitt weist eine der Anzahl der Fügenuten entsprechende Anzahl von sternförmig angeordnete gleichen Zahnstegen mit schwalbenschwanzartigen Zahnfüßen und Zahnköpfen oder -schuhen auf, deren Zahnköpfe oder -schuhe über dünne in Umfangsrichtung sich erstreckende Stege miteinander verbunden sind. Beim Paketieren der Zahnabschnitte werden solche Blechzuschnitt im axialen Abstand in das Zahnpaket eingelegt und auf den beiden äußeren Stirnseiten des Zahnpakets angeordnet. Durch diese Blechzuschnitte erhält das als Statorstern bezeichnete Stanzpaket der Zähne eine stabile Form.

Die Statorwicklung des bekannten Stators weist eine der Zähnezahl entsprechende Anzahl von langgestreckten Ringspulen auf, die auf Spulenkörper aufgewickelt und auf die Zähne des Statorsterns radial aufgeschoben werden. Danach wird das Statorjoch stirnseitig auf den mit der Statorwicklung versehenen Statorstern aufgesetzt und die Zahnfüße der Zähne im Statorstern in die Fügenuten im Rückschlussjoch formschlüssig eingeschoben.

Es ist auch bekannt, die Ringspulen der Statorwicklung spulenkörperlos als sog. Luftwicklungen herzustellen und in gleicher Weise auf die Zähne des Statorsterns aufzusetzen, wobei zwischen der Luftspule und den Zähnen eine elektrische Isolation in Form von eingelegten Papierstreifen oder einer Beschichtung der Zähne vorgesehen wird. Solche Luftspulen vereinfachen den Wickelprozess und ermöglichen einen höheren Nutfüllfaktor in den von den Zähnen eingeschlossenen Nuten des Stators. Damit die Ringspulen in Axial- und Radialrichtung unverschieblich auf den Zähnen gehalten werden, müssen bei der Fertigung der Ringspulen und bei der Paketierung des Statorsterns enge Toleranzen hinsichtlich der lichten Innenabmessungen der Ringspulen, des sog. Fensters der Ringspulen, und der Pakethöhe des Statorsterns eingehalten werden.

Mit der ER 1276207 A2 ist eine elektrische Rotationsmaschine bekannt geworden, bei der ein Hauptelement mehrere sternförmig angeordnete Zähne aufweist, auf denen jeweils elektrische Spulen angeordnet sind. Dabei sind an einer axialen Seite der Zähne sich radial verjüngende Klemmelemente angeordnet, mit denen die Spulen auf die Zähne angepresst werden.

### Vorteile der Erfindung

Das erfindungsgemäße Hauptelement für eine elektrische Maschine mit den Merkmalen des Anspruchs 1 hat den Vorteil, dass durch die mindestens an einer, vorzugsweise an beiden Stirnseiten des magnetisch leitfähigen Körpers angesetzte Ausgleichsmaske, die mit ihren Ausgleichselementen die stirnenden der Zähne überdeckt, die Ringspulen auf den Zähnen axial unverschieblich fixiert werden, ohne dass enge Toleranzen zwischen den Fensterabmessungen der Ringspulen und der Pakethöhe des magnetisch leitfähigen Körpers eingehalten werden müssen. Der Toleranzausgleich für einen festen Sitz der Ringspulen auf den Zähnen erfolgt durch den Federweg der sich axial elastisch verformenden Ausgleichselemente, die beim Aufsetzen der Ringspulen mehr oder weniger stark axial zusammengedrückt werden. Durch die Ausgleichselemente erfolgt zugleich eine elektrische Isolierung der Spulenköpfe der Ringspulen gegenüber den Zähnen sowie ein Schutz der Ringspulen gegen mechanische Beschädigungen durch die Zähnekanten.

Durch die auf beiden Stirnseiten des magnetisch leitfähigen Körpers aufgesetzten Ausgleichsmasken werden zusätzlich die Ringspulen mittig zu den Zähnen fixiert und die Stabilität des magnetisch leitfähigen Körpers erhöht, was vorteilhaft für den Montageprozess der Wicklung ist.

Durch die in den weiteren Ansprüchen aufgeführten Maßnahmen sind vorteilhafte Weiterbildungen und Verbesserungen des im Anspruch 1 angegebenen Hauptelements möglich.

Gemäß einer vorteilhaften Ausführungsform der Erfindung sind auf der vom Zahn abgekehrten Außenfläche der Ausgleichselemente parallele Rippen ausgebildet, die in Radialrichtung der Zähne mit Abstand voneinander übereinander angeordnete sind. Durch diese Rippen, die im Spulenkopf zwischen die Drahtwindungen der Ringspulen greifen, wird eine spiellose Fixierung der Ringspulen in Radialrichtung erreicht.

Gemäß einer vorteilhaften Ausführungsform der Erfindung ist das Ringelement, das die den Zähnen zugeordneten Ausgleichselemente zu einer Ausgleichsmaske verbindet, von einer vorzugsweisen dünnwandigen Ringhülse gebildet, von deren Außenwand die Ausgleichselemente sternförmig abstehen. Dabei weist die Ringhülse einen über die Ausgleichselemente axial hinausragenden Vorstehabschnitt auf, der bei auf die Zähne aufgesetzten Ringspulen die Unterseite der Spulenköpfe der Ringspulen überdeckt. Durch diesen Vorstehabschnitt wird die Stabilität der Wicklung im Bereich der Spulenköpfe verstärkt.

Gemäß einer vorteilhaften Ausführungsform der Erfindung ist zwischen den voneinander abgekehrten Längsseiten der Zähne einerseits und den diesen zugekehrten Innenlängsseiten der auf den Zähnen aufgeschobenen Ringspulen andererseits jeweils ein Isolierstreifen eingelegt, wodurch eine vollständige elektrische Isolierung zwischen Ringspulen und Zähnen erreicht wird. Die Isolierstreifen sind vorzugsweise an den einander zugekehrten Innenlängsseiten der Ringspulen befestigt, insbesondere angeklebt, und werden dadurch bei der Montage der Ringspulen auf die Zähne automatisch positioniert.

Gemäß einer vorteilhaften Ausführungsform der Erfindung sind die Isolierstreifen auf der nach außen weisenden Oberseite der Ringspule zu deren Abdeckung abgewinkelt, so dass die Ringspulen auch gegenüber eines später noch auf die freien Außenfläche der Zähne aufgeschobenen, hohlzylindrischen Rückschlussjochs elektrisch isoliert sind.

### Zeichnung

Die Erfindung ist anhand eines in der Zeichnung dargestellten Ausführungsbeispiels in der nachfolgenden Beschreibung näher erläutert. Es zeigen:
- Fig. 1: eine perspektivische Darstellung einer Ausgleichsmaske in Draufsicht,
- Fig. 2: eine perspektivische Darstellung eines Statorsterns eines Stators mit auf beiden Stirnseiten aufgesetzten Ausgleichsmasken,
- Fig. 3: eine gleiche Darstellung wie in Fig. 2 mit auf einigen Zähnen aufgesetzten Ringspulen,
- Fig. 4: eine vergrößere Darstellung des Ausschnitts IV in Fig. 3 in Draufsicht,
- Fig. 5: eine perspektivische Darstellung eines endmontierten Stators.

### Beschreibung des Ausführungsbeispiels

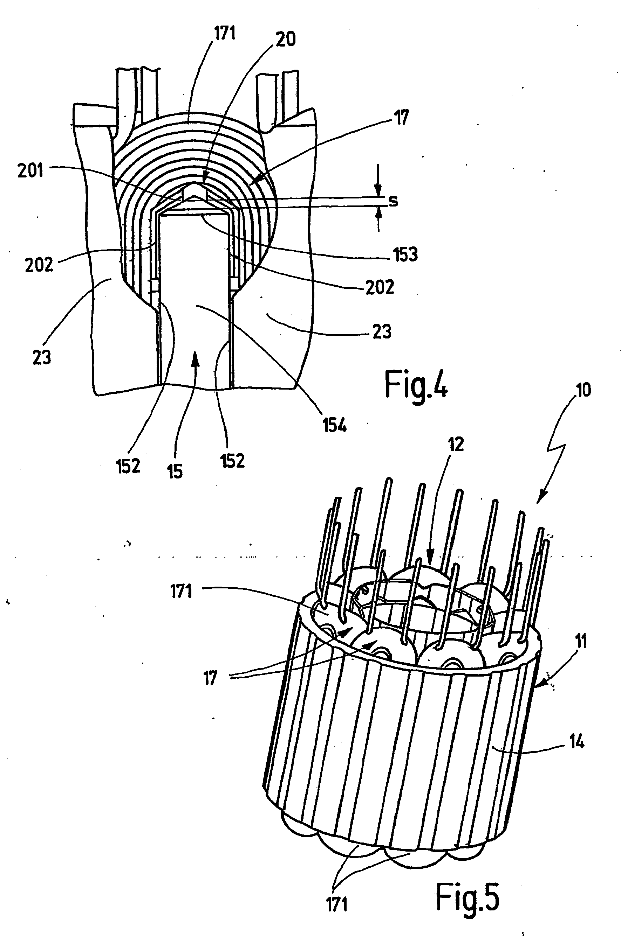

Das Hauptelement für eine elektrische Maschine wird nachfolgend am Beispiel eines Stators eines Gleichstrommotors mit Innenläufer beschrieben. Der Stator 10 (Fig. 5) weist einen als Statorkörper 11 bezeichneten, magnetisch leitfähigen Körper, der in bekannter Weise aus einer Vielzahl von zu einem Blechpaket zusammengesetzten Blechlamellen besteht, sowie eine Statorwicklung 12 auf. Zur erleichterten Aufbringung der Statorwicklung 12 auf den Statorkörper 11 ist der Statorkörper 11 geteilt und aus einem sog. Statorstern 13 und einen den Statorstern 13 außen umschließenden, hohlzylindrischen Rückschlussjoch 14 zusammengesetzt, wobei sowohl der Statorstern 13 als auch das Rückschlussjoch 14 als aus aneinanderliegenden Blechlamellen paketierte Blechpakete ausgeführt sind.

Der Statorstern 13 weist eine Mehrzahl von sternförmig angeordneten, radial ausgerichteten, sich in Längsrichtung erstreckenden Zähnen 15 auf, an deren nach innen weisenden Enden in Umfangsrichtung beidseitig über den Zahn 15 vorstehende Zahnschuhe 151 ausgebildet sind. Die Zahnschuhe 151 der im Ausführungsbeispiel insgesamt neun Zähne 15 sind über radial schmale Stege 16 miteinander verbunden. Ein Blechzuschnitt oder eine Lamelle des Statorsterns 13 besteht damit aus neun Zähnen 15 mit daran ausgebildeten Zahnschuhen 151 und neun Stegen 16, die einstückig mit den Zahnschuhen 151 verbunden sind. Entsprechend der gewünschten axialen Länge oder Pakethöhe des Statorsterns 13 werden entsprechend viele Blechzuschnitte zu dem Statorstern 13 paketiert, wobei der Statorstern 13 in der Pakethöhe einen Toleranzbereich von ca. 1,5 Blechstärken aufweist.
Die Statorwicklung 12 besteht aus miteinander verschalteten, langgestreckten, ovalen Ringspulen 17, die als spulenkörperlose Luftspulen getrennt vom Statorkörper 11 in einer Wickelmaschine gewickelt werden. Jeweils eine Ringspule 17 ist radial auf einem Zahn 15 aufgesetzt, so dass die Zahl der Ringspulen 17 der Zahl der Zähne 15 entspricht, im Ausführungsbeispiel also neun beträgt.

Für den Stator 10 ist es von wesentlicher Bedeutung, dass die Ringspulen 17 axial und radial unverschieblich auf den Zähnen 15 festgelegt sind und kein Spiel in dieser Richtung auftritt, das eine mechanische Belastung der Schaltverbindungen zwischen den Ringspulen 17 auslösen würde, was langfristig zu einem Bruch der Schaltverbindungen und damit zu einem Ausfall der Statorwicklung 12 führen würde. Die Innenabmessungen der Ringspulen 17, auch als Spulenfenster bezeichnet, müssen daher sehr toleranzgenau den Abmessungen der Zähne 15 angepasst sein, damit ein fester Sitz der Ringspulen 17 auf den Zähnen 15 gewährleistet ist. Durch den Toleranzbereich der Paketierhöhe des Statorsterns 13 ist jedoch ein solcher spielloser Sitz der Ringspulen 17 nur schwer zu realisieren.

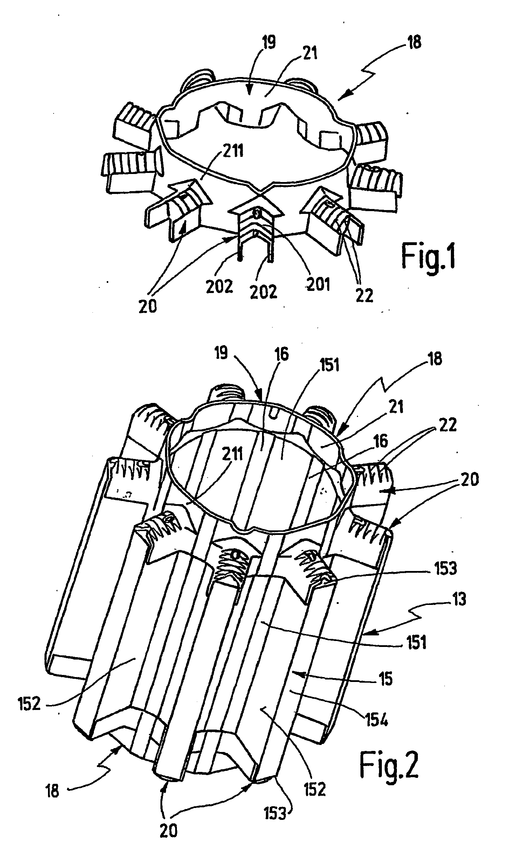

Um hier Abhilfe zu schaffen, ist auf jede Stirnseite des Statorsterns 13 eine in Fig. 1 perspektivisch dargestellt Ausgleichsmaske 18 aus elektrisch isolierendem Material aufgesteckt. Jede Ausgleichsmaske 18 weist eine der Zähnezahl entsprechende Anzahl von Ausgleichselementen 20, die in Achsrichtung der Zähne 15 elastisch verformbar sind, und ein die Ausgleichselemente 20 miteinander verbindendes, geschlossenes Ringelement 19 auf. Ringelement 19 und Ausgleichselemente 20 sind als einstückiges Kunststoffspritzteil hergestellt. Jedes Ausgleichselement 20 hat etwa U-Form mit einem dachförmig ausgebildeten Quersteg 201 und zwei sich vom Quersteg 201 einstückig fortsetzende U-Schenkeln 202. Das Ringelement 19 ist als dünnwandige Ringhülse 21 ausgeführt, von deren Außenwand die U-förmigen Ausgleichselemente 20 sternförmig abstehen, wobei die Ringhülse 21 einen über die radial ausgerichteten Querstege 201 der Ausgleichselement 20 axial hinausragenden Vorstehabschnitt 211 aufweist. Beim Aufsetzen der Ausgleichsmaske 18 auf die Stirnseiten des Statorsterns 13 wird jeweils ein Ausgleichselement 20 auf einen Zahn 15 aufgesetzt, so dass das Stirnende des Zahns 15 von dem dachförmigen Quersteg 201 überspannt ist und die kurzen U-Schenkel 202 sich auf die beiden voneinander abgekehrten Längsseiten 152 der Zähne 15 aufschieben. Wie aus Fig. 4 deutlich zu erkennen ist, besteht bei auf die Zähne 15 aufgesetzten Ausgleichselementen 20 zwischen dem Stirnende 153 des Zahns 15 und dem dachförmigen Quersteg 201 des Ausgleichselements 20 ein Federweg s, um den das Ausgleichselement 20 in Achsrichtung der Zähne 15 elastisch eingedrückt werden kann. Dieser Federweg s bestimmt den Toleranzbereich, den die Ausgleichsmaske 18 bezüglich oder Länge der Zähne 15, also der Pakethöhe des Statorsterns 13, auszugleichen vermag. Auf der vom Stirnende 153 eines Zahnes 15 abgekehrten Außenfläche eines jeden Ausgleichselements 20 sind parallele Rippen 22 ausgebildet, die in Radialrichtung mit Abstand voneinander übereinander angeordnet sind. Die Rippen 22 sind dabei einstückig aus dem dachförmigen Quersteg 201 ausgeformt.

Nach Aufsetzen der beiden Ausgleichsmasken 18 auf den Statorstern 13 werden die einzelnen Ringspulen 17 radial auf die Zähne 15 aufgeschoben, wobei je nach den vorhandenen Toleranzen zwischen axialer Länge der Zähne 15 und lichter Länge der Spulenfenster der Ringspulen 17 die Querstege 201 der Ausgleichselemente 20 von den Spulenköpfen 171 mehr oder weniger zum Stirnende 153 der Zähne 15 eingedrückt werden. Durch die Federrückstellkraft der Ausgleichselemente 20 werden damit die Ringspulen 17 kraftschlüssig und axial spiellos auf den Zähnen 15 festgelegt. Die an den Querstegen 201 der Ausgleichselemente 20 ausgebildeten Rippen 22 greifen zwischen die einzelnen Windungen in den Spulenköpfen 171 der Ringspulen 17 ein und verhindern somit eine radiale Bewegung der Ringspulen 17 auf den Zähnen 15. Die Spulenköpfe 171 der Ringspulen 17 liegen auf dem Vorstehabschnitt 211 der Ringhülse 21 auf, was zu einer erhöhten Stabilität der Statorwicklung 12 beiträgt.

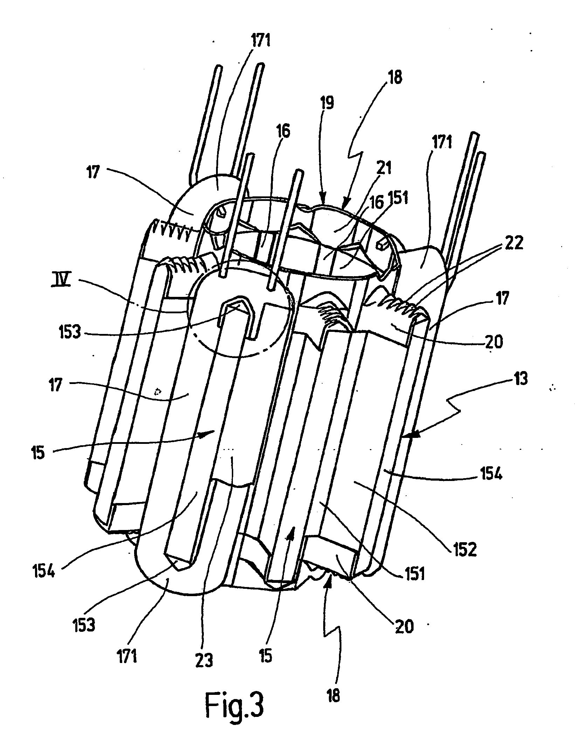

Zur weiteren Isolation der Ringspulen 17 gegenüber den Zähnen 15 ist zwischen den voneinander abgekehrten Längsseiten 152 der Zähne 15 einerseits und den diesen zugekehrten Innenlängsseiten der auf den Zähnen 15 aufgeschobenen Ringspulen 17 andererseits jeweils ein Isolierstreifen 23 eingelegt, wie dies in Fig. 3 und Fig. 4 angedeutet ist. Die Isolierstreifen 23 sind an den einander zugekehrten Innenlängsseiten der Ringspulen 17 befestigt, vorzugsweise angeklebt, so dass sie beim Aufstecken der Ringspule 17 auf die Zähne 15 automatisch richtig positioniert werden. Die Isolierstreifen 23 sind an der Austrittsstelle aus der Ringspule 17 abgewinkelt und überdecken die nach außen weisende Oberseiten der Ringspulen 17.

Auf den so mit Ringspulen 17 versehenen Statorstern 13 wird das hohlzylindrische Rückschlussjoch 14 axial aufgeschoben, wobei die radial nach außen weisenden Zahnflächen 154 formschlüssig an der Innenwand des Rückschlussjoches 14 anliegen. Durch die über die Oberseiten der Ringspulen 17 hinwegragenden Isolierstreifen 23 sind die Ringspulen 17 auch gegenüber dem Rückschlussjoch 14 elektrisch isoliert.

Die Erfindung ist nicht auf das als Stator beschriebene Hauptelement für eine elektrische Maschine beschränkt. In gleicher Weise kann das Hauptelement als Rotor z.B. eines Gleichstrommotors mit Außenläufer ausgebildet sein.

## Patentansprüche

1. Hauptelement für eine elektrische Rötatiohsmaschine mit einem aus axial aneinanderliegenden Lamellen zusammengesetzten, magnetisch leitfähigen Körper, der eine Mehrzahl von sternförmig angeordneten, sich axial erstreckenden Zähnen (15) aufweist, und mit einer Wicklung (12) aus einzelnen Ringspulen (17), die als spulenkörperlose Luftspulen separat gewickelt und radial auf die Zähne (15) aufgeschoben sind, **dadurch gekennzeichnet, dass** mindestens an einer Stirnseite des magnetisch leitfähigen Körpers auf jedes der in einer Querebene zur Körperachse liegenden Stirnenden (153) der Zähne (15) ein in axialer Richtung elastisch verformbares Ausgleichselement (20) aufgesetzt ist, auf das sich die auf den Zahn (15) aufgeschoben Ringspule (17) axial aufpresst, und dass alle Ausgleichselemente (20) über ein geschlossenes Ringelement (19) zu einer Ausgleichsmaske (18) miteinander verbunden sind.

2. Hauptelement nach Anspruch 1, **dadurch gekennzeichnet, dass** auf jeder Stirnseite des magnetisch leitfähigen Körpers eine Ausgleichsmaske (18) vorgesehen ist.

3. Hauptelement nach Anspruch 1 oder 2, **dadurch gekennzeichnet, dass** auf der vom Zahn (15) abgekehrten Außenfläche der Ausgleichselemente (20) parallele Rippen (22) ausgebildet sind, die in Radialrichtung des Zahns (15) mit Abstand voneinander übereinander angeordnet sind.

4. Hauptelement nach einem der Ansprüche 1 - 3, **dadurch gekennzeichnet, dass** das Ausgleichselement (20) U-Form mit einem dachförmig ausgebildeten Quersteg (201) und zwei sich vom Quersteg (201) einstückig fortsetzenden, kurzen U-Schenkeln (202) aufweist und dass der Quersteg (201) das Stirnende (153) des Zahns (15) überdeckt und die U-Schenkel (202) über die voneinander abgekehrten Längsseiten (152) der Zahns (15) greifen.

5. Hauptelement nach Anspruch 4, **dadurch gekennzeichnet, dass** die Rippen (22) einstückig aus dem dachförmigen Quersteg (201) ausgeformt sind.

6. Hauptelement nach Anspruch 4 oder 5, **dadurch gekennzeichnet, dass** der dachförmige Quersteg (201) so ausgebildet ist, dass zwischen den Dachflächen und dem Stirnende (153) des Zahns (15) ein Federweg (s) zum Einfedern des Querstegs (201) vorhanden ist.

7. Hauptelement nach einem der Ansprüche 1 - 6, **dadurch gekennzeichnet, dass** das Ringelement (19) von einer vorzugsweise dünnwandigen Ringhülse (21) gebildet ist, von deren Außenwand die Ausgleichselemente (20) sternförmig abstehen.

8. Hauptelement nach Anspruch 7, **dadurch gekennzeichnet, dass** die Ringhülse (21) einen über die Querstege (201) der Ausgleichselemente (20) axial hinausragenden Vorstehabschnitt (211) aufweist, der bei auf die Zähne (15) aufgesetzten Ringspulen (17) die Unterseiten der Spulenköpfe (171) der Ringspulen (17) überdeckt .

9. Hauptelement nach Anspruch 7 oder 8, **dadurch gekennzeichnet, dass** Ringhülse (21) und Ausgleichselemente (20) einstückig als Kunststoffspritzteil hergestellt sind.

10. Hauptelement nach einem der Ansprüche 1 - 9, **dadurch gekennzeichnet, dass** zwischen den voneinander abgekehrten Längsseiten (152) der Zähne (15) einerseits und den diesen zugekehrten Innenlängsseiten der auf den Zähnen (15) aufgeschobenen Ringspulen (17) andererseits jeweils ein Isolierstreifen (23) einliegt.

11. Hauptelement nach Anspruch 10, **dadurch gekennzeichnet, dass** jeweils ein Isoliersteifen (23) an den einander zugekehrten Innenlängsseiten der Ringspulen (17) befestigt, vorzugsweise angeklebt, ist.

12. Hauptelement nach Anspruch 10 oder 11, **dadurch gekennzeichnet, dass** die Isolierstreifen (23) auf der nach außen weisenden Oberseite der Ringspulen (17) zu deren Abdeckung abgewinkelt sind.

13. Hauptelement nach einem der Ansprüche 1 - 12, **dadurch gekennzeichnet, dass** der magnetisch leitfähige Körper ein hohlzylindrisches Rückschlussjoch (14) aufweist, der auf die nach außen weisenden, freien Zahnflächen (154) der mit den Ringspulen (17) bestückten Zähne (15) aufgeschoben ist.

## Claims

1. Main element for a rotating electrical machine having a magnetically permeable body which is composed of laminates which rest on one another axially, which body has a plurality of axially extending teeth (15) which are arranged in the form of a star, and having a winding (12) composed of individual ring coils (17) which are wound separately as air-cored coils without any coil former and are pushed radially onto the teeth (15), **characterized in that** a compensation element (20) which can be deformed elastically in the axial direction is placed on each of the ends (153) of the teeth (15), which ends (153) lie on a lateral plane with respect to the body axis, at least on one end face of the magnetically permeable body, onto which compensation element (20) the ring coil (17) which has been pushed onto the tooth (15) is pressed axially, and **in that** all the compensation elements (20) are connected to one another via a closed ring element (19) to form a compensation mask (18).

2. Main element according to Claim 1, **characterized in that** a compensation mask (18) is provided on each end face of the magnetically permeable body.

3. Main element according to Claim 1 or 2, **characterized in that** parallel ribs (22) are formed on that outer surface of the compensation elements (20) which faces away from the tooth (15), which ribs (22) are arranged at a distance from one another, one above the other, in the radial direction of the tooth (15).

4. Main element according to one of Claims 1-3, **characterized in that** the compensation element (20) is U-shaped with a lateral web (201) in the form of a roof and with two short U-limbs (202) which continue integrally from the lateral web (201), and **in that** the lateral web (201) covers the end (153) of the tooth (15), and the U-limbs (202) engage over the mutually averted longitudinal faces (152) of the tooth (15).

5. Main element according to Claim 4, **characterized in that** the ribs (22) are integrally formed from the lateral web (201), which is in the form of a roof.

6. Main element according to Claim 4 or 5, **characterized in that** the lateral web (201), which is in the form of a roof, is designed such that there is a spring path (s) for the lateral web (201) to spring in, between the roof surfaces and the end (153) of the tooth (15).

7. Main element according to one of Claims 1-6, **characterized in that** the ring element (19) is formed by a preferably thin-walled annular sleeve (21), from whose outer wall the compensation elements (20) project in the form of a star.

8. Main element according to Claim 7, **characterized in that** the annular sleeve (21) has a projecting section (211) which projects axially over the lateral webs (201) of the compensation elements (20) and covers the lower faces of the coil heads (171) of the ring coils (17) when the ring coils (17) are placed on the teeth (15).

9. Main element according to Claim 7 or 8, **characterized in that** the annular sleeve (21) and the compensation elements (20) are produced integrally, as a plastic injected-moulded part.

10. Main element according to one of Claims 1-9, **characterized in that** an insulating strip (23) is in each case inserted between the mutually averted longitudinal faces (152) of the teeth (15) on the one hand and the inner longitudinal faces, facing them, of the ring coils (17) which have been pushed onto the teeth (15), on the other hand.

11. Main element according to Claim 10, **characterized in that** one insulating strip (23) is in each case attached, preferably adhesively bonded, to the mutually facing inner longitudinal faces of the ring coils (17).

12. Main element according to Claim 10 or 11, **characterized in that** the insulating strips (23) are unwound on the upper face, pointing outwards, of the ring coils (17) to form their cover.

13. Main element according to one of Claims 1-12, **characterized in that** the magnetically permeable body has a hollow-cylindrical return path yoke (14) which is pushed onto those free tooth surfaces (154) which point outwards of the teeth (15) which have been fitted with the ring coils (17).

## Revendications

1. Elément principal pour machine électrique tournante, qui présente:
un corps magnétiquement conducteur constitué de l'assemblage de lamelles adjacentes dans la direction axiale et doté de plusieurs dents (15) disposées en étoile et s'étendant axialement et
un enroulement (12) de bobines annulaires distinctes (17) qui sont enroulées séparément sous la forme de bobines à air sans corps de bobine et qui sont enfichées radialement sur les dents (15),
**caractérisé en ce qu'**
au moins sur un côté frontal du corps magnétiquement conducteur, un élément de compensation (20) élastiquement déformable dans la direction axiale et sur lequel la bobine annulaire (17) enfichée sur la dent (15) est repoussée axialement est placé sur chacune des extrémités frontales (153), situées dans un plan transversal par rapport à l'axe du corps, des dents (15) et
**en ce que** tous les éléments de compensation (20) sont reliés mutuellement par un élément annulaire fermé (19) pour former un masque de compensation (18).

2. Elément principal selon la revendication 1, **caractérisé en ce qu'**un masque de compensation (18) est prévu sur chaque côté frontal du corps magnétiquement conducteur.

3. Elément principal selon la revendication 1 ou 2, **caractérisé en ce que** des nervures parallèles (22) disposées les unes au-dessus des autres et à distance les unes des autres dans la direction radiale de la dent (15) sont formées sur la surface extérieure, non tournée vers la dent (15), des éléments de compensation (20).

4. Elément principal selon l'une des revendications 1 à 3, **caractérisé en ce que** l'élément de compensation (20) présente la forme d'un U avec une branche transversale (201) configurée en toit et deux courtes branches de U (202) qui prolongent d'un seul tenant la branche transversale (201) et **en ce que** la branche transversale (201) recouvre l'extrémité frontale (153) de la dent (15) et les branches (202) du U chevauchent les côtés longitudinaux (152), non tournés l'un vers l'autre, de la dent (15).

5. Elément principal selon la revendication 4, **caractérisé en ce que** les nervures (22) sont formées d'un seul tenant sur la branche transversale (201) en forme de toit.

6. Elément principal selon la revendication 4 ou 5, **caractérisé en ce que** la branche transversale (201) en forme de toit est configurée de telle sorte qu'entre les surfaces du toit et l'extrémité frontale (153) de la dent (15) est prévu un parcours élastique (s) qui permet l'amortissement de la branche transversale (201).

7. Elément principal selon l'une des revendications 1 à 6, **caractérisé en ce que** l'élément annulaire (19) est formé par une douille annulaire (21), de préférence à paroi mince, de la paroi extérieure de laquelle les éléments de compensation (20) débordent en forme d'étoile.

8. Elément principal selon la revendication 7, **caractérisé en ce que** la douille annulaire (21) présente une partie en relief (211) qui déborde axialement au-delà de la branche transversale (201) des éléments de compensation (20) et qui, lorsque les bobines annulaires (17) sont placées sur les dents (15), recouvre le côté inférieur de la tête (171) des bobines annulaires (17).

9. Elément principal selon la revendication 7 ou 8, **caractérisé en ce que** la douille annulaire (21) et les éléments de compensation (20) sont fabriqués d'un seul tenant sous la forme d'une pièce en matière synthétique moulée par injection.

10. Elément principal selon l'une des revendications 1 à 9, **caractérisé en ce qu'**un ruban d'isolation (23) est inséré d'une part entre les côtés longitudinaux (152), non tournés l'un vers l'autre, des dents (15) et d'autre part entre les côtés longitudinaux intérieurs, tournés vers ces dernières, des bobines annulaires (17) enfichées sur les dents (15).

11. Elément principal selon la revendication 10, **caractérisé en ce qu'**un ruban d'isolation (23) est fixé de préférence par collage sur chacun des côtés longitudinaux intérieurs, tournés l'un vers l'autre, des bobines annulaires (17).

12. Elément principal selon la revendication 10 ou 11, **caractérisé en ce que** sur le côté supérieur, tourné vers l'extérieur, des bobines annulaires (17), les rubans d'isolation (23) sont coudés pour recouvrir ces dernières.

13. Elément principal selon l'une des revendications 1 à 12, **caractérisé en ce que** le corps magnétiquement conducteur présente une culasse cylindrique creuse (14) de fermeture arrière qui est enfichée sur les surfaces libres (154), tournées vers l'extérieur, des dents (15) munies des bobines annulaires (17).
